# FASCICULE DE BREVET EUROPEEN

(11) **EP 3 379 389 B1**
(45) Date de publication et mention de la délivrance du brevet: **19.08.2020**
(21) Numéro de dépôt: 18162447.9
(22) Date de dépôt: 19.03.2018
(51) Int. Cl.: G06F 3/02, G06F 21/83, G06F 21/86

(54) **CLAVIER SÉCURISÉ POUR DISPOSITIF ÉLECTRONIQUE DE SAISIE DE DONNÉES**
GESICHERTE TASTATUR FÜR ELEKTRONISCHE DATENERFASSUNGSVORRICHTUNG
SECURE KEYBOARD FOR ELECTRONIC DATA ENTRY DEVICE

(30) Priorité: 22.03.2017 FR 1752381
(43) Date de publication de la demande: 26.09.2018
(73) Titulaire: INGENICO GROUP, 75015 Paris (FR)
(72) Inventeur: CARABELLI, André, 07130 Saint-Peray (FR); PAVAGEAU, Stéphane, 26600 La Roche de Glun (FR)
(74) Mandataire: Vidon Brevets & Stratégie

(56) Documents cités:
- US-A1- 2001 048 379
- US-A1- 2010 102 127
- US-A1- 2013 306 450
- US-B2- 8 367 958

## Description

### 1. Domaine de l'invention

Le domaine de l'invention est celui des claviers pour dispositifs électroniques de saisie de données. Plus particulièrement, l'invention se rapporte aux claviers permettant de saisir des données sensibles au sein de dispositifs électroniques utilisés pour effectuer des opérations qui font intervenir ou portent sur des objets de nature confidentielle. C'est le cas par exemple des terminaux de paiement, dont le clavier est notamment utilisé pour la saisie d'un code confidentiel associé à une carte de paiement.

### 2. Art Antérieur

Un dispositif électronique de saisie de données comprend le plus souvent un écran permettant d'afficher l'interface graphique d'une application courante exécutée au sein du dispositif, et un clavier permettant à un utilisateur d'interagir avec ladite application. Le clavier comprend traditionnellement un ensemble de touches, qui sont généralement associées à un ou plusieurs caractères alphanumériques ou de ponctuation, ou encore à un ou plusieurs pictogrammes. Par des appuis successifs sur ces touches, un utilisateur a ainsi la possibilité de former puis de valider une séquence de données, représentative d'une information à fournir au dispositif électronique de saisie de données pour la mise en œuvre d'un traitement. Par exemple, les touches du clavier d'un terminal de paiement peuvent être utilisées pour saisir le montant d'une transaction financière, ou encore un code confidentiel associé à une carte de paiement. À cette fin, il existe de nombreux types de claviers. On distingue par exemple les claviers physiques des claviers virtuels (affichés sur des écrans tactiles, par exemple de smartphones, ou de terminaux de paiements avec écran tactile). Tous les dispositifs électroniques de saisie de données ne sont cependant pas dotés d'un écran tactile, et il existe de nombreuses situations dans lesquelles la mise en œuvre d'un clavier physique demeure une solution mieux adaptée. Cela peut par exemple être le cas pour des raisons de maitrise des coûts de production du dispositif de saisie de données (un écran tactile est onéreux), ou bien encore parce qu'un clavier physique offre un retour tactile naturel à l'utilisateur (qui peut littéralement toucher et ressentir les touches et les appuis sous ses doigts, ce qui est plus difficile à mettre en œuvre avec un clavier virtuel). Un clavier physique offre également la possibilité d'ajouter du relief sur les touches, ce qui le rend utilisable par des personnes non voyantes. Les claviers physiques conservent donc tout leur intérêt. Un clavier physique est souvent intégré au sein du boitier du dispositif électronique de saisie de données, en particulier quand ce dispositif est un dispositif portable.

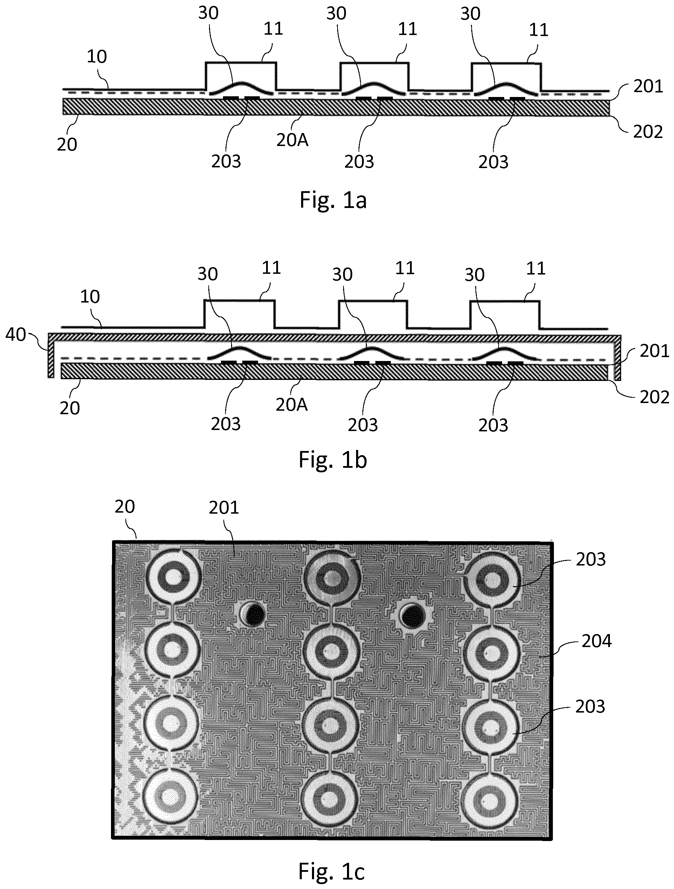

La **figure 1a** décrit un exemple de structure d'un clavier physique de l'art antérieur, dans une vue simplifiée qui en représente les principaux éléments. Un tel clavier comprend au moins une, et généralement plusieurs, touches 11. Ces touches 11 peuvent prendre la forme de pièces indépendantes les unes des autres, ou encore être formées dans une même membrane. Dans les deux cas, elles sont généralement disposées sensiblement dans un même plan (le plan du clavier), définissant ainsi une couche 10 de touches. Un circuit imprimé de connexion 20 est disposé sous la couche 10 de touches. Ce circuit imprimé de connexion 20 permet de connecter électriquement le clavier aux autres composants du dispositif électronique de saisie de données. Le circuit imprimé de connexion 20 comprend notamment une portion de détection d'appui touche 20A présentant une face externe 201, orientée vers la couche de touches 10, et une face interne 202 opposée à ladite face externe 201 (dans l'ensemble du document, l'expression « appui touche » est utilisée pour désigner le fait qu'au moins une touche du clavier soit pressée par l'utilisateur). Au regard de chaque touche 11 du clavier, au moins une paire de contacts 203 est disposée sur la face externe 201 du circuit imprimé de connexion 20. Chaque touche 11 est également associée à un élément d'interconnexion 30 destiné à assurer l'interconnexion électrique des contacts 203 de la paire de contacts associés à la touche considérée, lorsqu'une pression est exercée sur cette dernière. L'élément d'interconnexion 30 est donc placé entre la touche et la paire de contacts associée. Lorsqu'une touche 11 est dans son état de repos, c'est à dire non enfoncée, les contacts 203 de la paire de contacts associée à la touche ne sont pas connectés électriquement. Lorsque la touche est pressée, sous l'action d'un doigt de l'utilisateur par exemple, la force de pression est transmise de la touche 11 à l'élément d'interconnexion 30, et provoque un changement d'état de cet élément d'interconnexion 30. Ce changement d'état, qui peut prendre la forme d'un déplacement et/ou d'une déformation de l'élément d'interconnexion 30, entraine l'interconnexion électrique des différents contacts de la paire de contacts 203, ce qui provoque la détection, au niveau du circuit imprimé de connexion 20, de l'appui sur la touche. Par rapport à un simple déplacement de l'élément d'interconnexion 30, une déformation est intéressante en ce qu'elle permet de fournir un retour tactile plus marqué à l'utilisateur. Un moyen connu, simple et peu coûteux de mettre en œuvre une telle déformation est d'utiliser des éléments d'interconnexion 30 qui se présentent sous la forme de dômes déformables. Au-delà d'une certaine pression exercée sur le sommet du dôme, le dôme subit une transformation brusque en s'écrasant, et l'utilisateur ressent immédiatement que son appui sur la touche a bien été pris en compte. Plus précisément, le sommet du dôme se comprime vers sa base, jusqu'à ce qu'une partie métallisée située à l'intérieur du dôme, sous son sommet, entre en contact avec la paire de contacts 203 et provoque l'interconnexion électrique de ces contacts. Les différents dômes associés aux touches du clavier peuvent être indépendants les uns des autres. Ils peuvent également être reliés entre eux, en étant rassemblés sous la forme d'une feuille de dômes (représentée en pointillés sur les figures). Une telle feuille de dômes est généralement une feuille formée dans une matière ayant des propriétés d'isolant électrique, et sur laquelle sont collés les dômes au moyen d'un adhésif double-face. L'utilisation d'une feuille de dômes permet notamment de faciliter un positionnement correct des dômes au regard des touches du clavier. Afin de faire contre-appui à la pression exercée sur une touche 11 (et transmise à l'élément d'interconnexion associé 30), le circuit imprimé de connexion 20 est, au moins dans sa portion de détection d'appui touche 20A, un circuit imprimé rigide qui repose par exemple sur un support de type époxy. Le circuit imprimé de connexion 20 peut prendre la forme d'un circuit imprimé rigide propre et spécifique au clavier, qui est par exemple raccordé à la carte mère du dispositif électronique de saisie de données. Alternativement, la carte mère du dispositif électronique de saisie de données peut elle-même faire office, entre autres fonctionnalités, de circuit imprimé de connexion 20 : les paires de contacts 203 et les pistes électriques nécessaires à la mise en œuvre du clavier sont alors directement intégrées à la carte mère du dispositif électronique de saisie de données.

Un inconvénient d'un clavier tel que celui décrit en relation avec la figure la est qu'il n'est pas sécurisé : en effet, il est relativement aisé pour une personne malveillante d'accéder aux signaux de détection des appuis sur les touches, par exemple en introduisant des sondes au niveau des contacts 203, ou au niveau des pistes électriques présentes sur le circuit imprimé de connexion 20. Cela pose un problème de sécurité, notamment lorsqu'un tel clavier est utilisé pour la saisie de données sensibles. En l'absence de mécanismes de protection, une personne malveillante peut ainsi parvenir à récupérer des informations confidentielles saisies par un utilisateur sur le clavier (le code confidentiel associé à une carte bancaire par exemple).

La demande de brevet américain publiée sous le numéro US 2014/0091930 décrit, dans un de ses aspects, une solution permettant de renforcer la sécurisation d'un clavier de ce type. Cette solution est présentée de manière simplifiée et schématique en relation avec les figures 1b et 1c.

La **figure 1b** représente un clavier sous une vue similaire à celle de la figure la. Le circuit imprimé de connexion 20 de la figure 1b est également représenté vu de dessus sur la **figure 1c****.** Ce circuit imprimé de connexion 20 est un circuit imprimé rigide qui comprend sur sa face externe 201 des paires de contacts 203 (douze dans l'exemple de la figure 1c), chacune étant associée à une touche 11 du clavier. Afin de renforcer la sécurisation du clavier, et comme représenté sur la figure 1c, le circuit imprimé de connexion 20 comprend également un ou plusieurs treillis de détection d'intrusion 204, qui s'étendent sur une majeure partie de sa face externe 201, autour des paires de contact 203, voire éventuellement sous ces paires de contacts 203. Les treillis de détection d'intrusion 204 contribuent à renforcer la sécurisation du dispositif électronique de saisie de données : ils permettent par exemple de détecter une tentative d'intrusion visant à accéder, notamment par perçage, à des pistes électriques qui se situeraient par exemple sur la face interne 202 du circuit imprimé de connexion 20 (telles que les pistes électriques véhiculant les signaux sensibles de détection d'appui touche). Cependant, ces treillis de détection d'intrusion 204 n'offrent qu'une sécurisation partielle du clavier : comme cela est visible sur la figure 1c, les paires de contacts 203 associées à chaque touche du clavier ne sont pas protégées par le treillis de détection d'intrusion 204. Cette protection incomplète est une contrainte qui découle de la structure même du clavier : les paires de contacts doivent rester immédiatement accessibles sous les éléments d'interconnexion 30, afin de permettre la détection des appuis sur les touches lorsque ces dernières sont enfoncées. Aussi, ces zones où sont situées les paires de contacts 203 constituent des points de faiblesse du clavier, car non protégées et relativement facilement accessibles à une personne malveillante.

Pour remédier à ce problème, le document US 2014/0091930 divulgue la possibilité d'ajouter un circuit imprimé complémentaire de protection, qui se présente sous la forme d'un circuit imprimé flexible 40 intégralement recouvert d'un treillis de protection. Ce circuit imprimé flexible 40 est disposé sous la couche 10 de touches, mais au-dessus des éléments d'interconnexion 30 (si les éléments d'interconnexion 30 sont des dômes déformables, le circuit imprimé flexible 40 est par exemple positionné entre la couche 10 de touches et le sommet des dômes déformables 30). De par son caractère flexible, le circuit imprimé 40 peut subir des déformations locales : il n'entrave donc pas la communication de la force de pression exercée sur une touche 11 (située au-dessus du circuit imprimé flexible 40) à l'élément d'interconnexion correspondant 30 (situé sous le circuit imprimé flexible 40, au regard de la touche 11 pressée). Ce circuit imprimé flexible 40 peut également être rabattu au niveau de ses côtés de manière à former, conjointement avec le circuit imprimé de connexion 20, une enceinte de protection autour des points de contacts 203. Une telle solution permet donc de renforcer la sécurisation du clavier. Elle est cependant coûteuse, car elle impose de recourir à un circuit imprimé complémentaire de protection (le circuit imprimé flexible 40), différent du circuit imprimé de connexion 20, pour assurer une sécurisation efficace du clavier.

Les documents US 2001/0048379 A1 et US 8367958 B2 proposent des claviers dont les paires de contacts sont disposées sur la face interne du circuit imprimé de connexion.

Il existe donc un besoin d'une solution qui offre une protection suffisamment complète d'un clavier sur lequel sont susceptibles d'être saisies des données confidentielles, mais qui soit également plus simple et moins coûteuse à mettre en œuvre que les solutions de l'art antérieur.

### 3. Résumé de l'invention

La présente technique permet de résoudre en partie les problèmes posés par l'art antérieur. La présente technique se rapporte en effet à un clavier pour dispositif électronique de saisie de données qui comprend :
- une pluralité de touches définissant une couche de touches ;
- un circuit imprimé de connexion dudit clavier, comprenant une portion de détection d'appui touche, ladite portion de détection d'appui touche comprenant une face externe, orientée vers ladite couche de touches, et une face interne opposée à ladite face externe ;
- pour chaque touche de ladite couche de touches, un élément d'interconnexion et au moins une paire de contacts sur ledit circuit imprimé de connexion, ledit élément d'interconnexion étant destiné à assurer l'interconnexion électrique des contacts de ladite paire de contacts lorsqu'une pression est exercée sur la touche associée dudit clavier.

En outre, selon la technique proposée :
- le circuit imprimé de connexion est un circuit imprimé flexible qui comprend également une portion de raccordement formant un repli sous la face interne de ladite portion de détection d'appui touche ; et
- ladite au moins une paire de contacts est disposée sur la face interne de la portion de détection d'appui touche.

De cette manière, le clavier selon l'invention est plus sécurisé que les claviers traditionnels, dans la mesure où les contacts de détection d'un appui touche ne sont plus immédiatement accessibles sous la touche associée, mais sont disposés sur la face interne d'un circuit imprimé flexible. En d'autres termes, ces contacts sont maintenant situés sous le circuit imprimé flexible, qui forme alors une protection s'opposant à un accès direct à ces contacts par le dessus du clavier. Le circuit imprimé flexible comprend par ailleurs une portion de raccordement qui forme un repli sous la face interne. Ainsi, le repli forme une protection s'opposant à un accès aux contacts par au moins un côté du clavier, voire tous les côtés dans certains modes de réalisation. Enfin, l'élément auquel le circuit imprimé flexible est raccordé - typiquement la carte mère du dispositif électronique de saisie de données - forme naturellement une protection complémentaire s'opposant à un accès aux contacts des touches par le dessous du clavier. De cette manière, le circuit imprimé flexible forme, avec par exemple la carte mère sur lequel il est raccordé, une enceinte de protection qui enferme - et donc protège - complètement les zones sensibles du clavier, où sont susceptibles de transiter des données confidentielles.

Dans un mode de réalisation particulier, le circuit imprimé flexible comprend au moins un élément de protection qui s'étend sensiblement sur toute la surface de ladite face externe et/ou sur toute la surface d'au moins une couche dudit circuit imprimé flexible positionnée entre ladite face interne et ladite face externe.

De cette manière, la sécurisation du clavier est encore accrue, sans qu'il soit nécessaire de recourir à un circuit imprimé de protection complémentaire spécifique (comme c'est le cas par exemple dans la solution de l'art antérieur illustrée en relation avec la figure 1b déjà décrite, dans laquelle l'utilisation d'un circuit imprimé de protection complémentaire 40 s'avère nécessaire). En effet, le circuit imprimé flexible de la technique proposée est un circuit imprimé multicouches, a minima double-face, dont la face interne est exploitée pour la mise en œuvre du circuit de détection des appuis touches et éventuellement d'autres circuits complémentaires, et dont la face externe et/ou au moins une couche enfouie dans le circuit imprimé flexible est intégralement couverte par ces éléments de protection. Ainsi, la solution proposée permet de se passer de l'utilisation d'un circuit imprimé de protection complémentaire spécifique, ce qui permet de mettre en œuvre un clavier de structure plus compacte, tout en réduisant les coûts et sans pour autant diminuer le niveau de sécurisation.

Dans un mode de réalisation particulier, ledit élément d'interconnexion prend la forme d'un dôme déformable disposé entre ladite face interne de la portion de détection d'appui touche et un élément de contre-appui, la base dudit dôme déformable étant orientée vers ladite face interne.

Ainsi, un élément d'interconnexion bien connu - en l'occurrence un dôme déformable couramment disponible dans le commerce et peu onéreux - est astucieusement positionné dans une position inversée vis-à-vis des solutions classiques de l'art antérieur. En comparaison avec le montage classique (c'est à dire non inversé) des dômes décrit dans les solutions de l'art antérieur, le montage inversé selon la technique proposée permet d'obtenir une meilleure tenue mécanique des touches du clavier, une stabilité accrue du clavier dans son ensemble, et un meilleur effet tactile pour l'utilisateur lorsque ce dernier presse une touche.

Selon une caractéristique particulière de ce mode de réalisation, les dômes déformables sont conformés et dimensionnés de sorte qu'une pression exercée sur une touche dudit clavier entraîne une déformation locale du circuit imprimé flexible sur une surface de dimension relativement large, par exemple de l'ordre de quatre millimètres par quatre millimètres.

Ainsi, le circuit imprimé flexible est relativement peu contraint par la déformation subie suite à un appui sur une touche, car les dômes déformables et les touches sont conformées et dimensionnées de manière à appuyer sur une surface relativement large du circuit imprimé flexible. Il en résulte que les éléments de protection éventuellement intégrés au circuit imprimé flexible sont également moins contraints lors de la déformation du circuit imprimé flexible. De cette manière, l'usure de ces éléments de protection, en particulier lorsqu'ils prennent la forme de treillis de protection, est limitée vis-à-vis des solutions de l'art antérieur. Les risques de détections incorrectes et intempestives d'intrusion, qui seraient en fait dues à la détérioration prématurée du treillis de protection alors même que le clavier faisait l'objet d'une utilisation tout à fait normale, sont donc réduits.

Dans un mode de réalisation particulier de la technique proposée l'élément de contre-appui prend la forme d'un capot de protection destiné à protéger un élément du dispositif électronique de saisie de données.

De cette manière, un élément du clavier est exploité de manière astucieuse pour faire à la fois office d'élément de contre-appui, mais également de dispositif de protection d'un autre élément sensible du dispositif électronique de saisie de données, tel qu'un lecteur de cartes à mémoire par exemple. Un tel capot de protection peut être un capot métallique ou un capot en matière plastique, voire un capot formé par un autre circuit imprimé rigide.

Dans un autre mode de réalisation particulier, l'élément de contre-appui est la carte mère du dispositif électronique de saisie de données.

Une telle configuration, combinée au fait que les dômes soient inversés, permet de libérer de la place sur la carte mère, vis-à-vis des solutions de l'art antérieur. En effet la carte mère joue alors un simple rôle de contre-appui mécanique, et il n'est plus nécessaire d'y intégrer les paires de contacts associées aux touches du clavier, ce qui permet d'y libérer de la place. Par ailleurs, les surfaces de la carte mère réservées pour faire office de zones de contre-appui sont réduites vis-à-vis des solutions de l'art antérieur, dans la mesure où ce sont maintenant les sommets des dômes - donc leur partie la plus étroite - et non plus leurs bases qui viennent en appui sur la carte mère, d'où un gain d'espace encore accentué.

Dans encore un autre mode de réalisation particulier, l'élément de contre-appui prend la forme d'un élément d'espacement prenant appui, via des liaisons sensiblement ponctuelles ou linéaires, sur la carte mère du dispositif électronique de saisie de données.

Une telle configuration permet de libérer encore plus de place sur la carte mère, tout en conservant une structure de clavier relativement compacte. En particulier, les liaisons ponctuelles ou linéaires établies entre l'élément d'espacement et la carte mère sont conformées et dimensionnées de manière à prendre moins de place que des liaisons qui seraient établies directement via les sommets des dômes déformables.

Selon un autre aspect, la technique proposée se rapporte également à un dispositif électronique de saisie de données qui comprend un clavier tel que précédemment décrit. Un tel dispositif électronique de saisie de données peut notamment prendre la forme d'un terminal de paiement électronique.

Les différents modes de réalisation mentionnés ci-dessus sont combinables entre eux pour la mise en œuvre de l'invention.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure la, déjà décrite en relation avec l'art antérieur, présente une vue schématique simplifiée d'un exemple de structure classique d'un clavier physique;
- la figure 1b, déjà décrite en relation avec l'art antérieur, présente une vue schématique d'un clavier du même type que celui de la figure la, mais intégrant des moyens de protection ;
- la figure 1c, déjà décrite en relation avec l'art antérieur, montre une vue de dessus d'un circuit imprimé de connexion d'un clavier de l'art antérieur, tel que celui de la figure 1b, avec son treillis de protection ;
- la figure 2 présente une vue schématique simplifiée d'une structure de clavier dans un premier mode de réalisation particulier de l'invention ;
- la figure 3 présente une vue schématique simplifiée d'une structure de clavier dans un deuxième mode de réalisation particulier de l'invention ;
- la figure 4 présente une vue schématique simplifiée d'une structure de clavier dans un troisième mode de réalisation particulier de l'invention.

### 5. Description détaillée

### Principe général

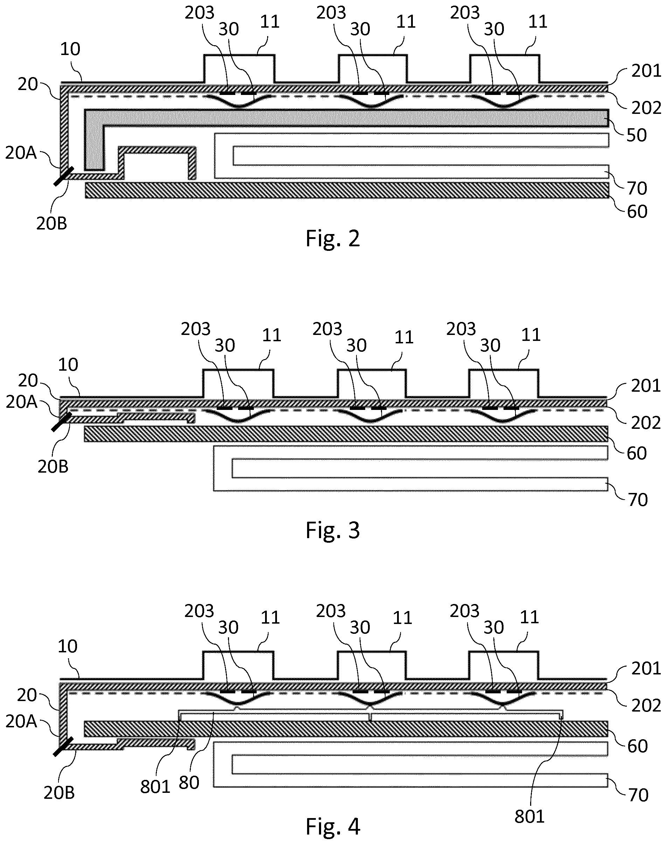

Le principe général d'un clavier selon la technique proposée est présenté en relation avec la **figure 2****.** Il convient cependant de noter que ce principe général pourrait tout aussi bien être présenté en relation avec les figures 3 ou 4 ; les figures 2, 3 et 4 illustrant différents modes de réalisation d'un clavier dont la sécurisation repose sur un même principe général. Dans toute la description, les éléments de même nature sont identifiés par une même référence numérique dans les figures.

Le clavier selon la technique proposée présente de nombreuses caractéristiques structurelles communes avec les claviers de l'art antérieur, tels que ceux déjà décrits en relation avec les figures la et 1b. Tout comme les claviers de l'art antérieur, le clavier selon l'invention comprend au moins une touche 11, généralement plusieurs. Les touches 11 sont disposées sensiblement dans un même plan, définissant ainsi une couche 10 de touches. Ces touches 11 sont éventuellement liées entre-elles au sein d'une même membrane, mais elles peuvent aussi être indépendantes les unes de autres. Un circuit imprimé de connexion 20, comprenant une portion de détection d'appui touche 20A, est également disposé sous la couche 10 de touches. La portion de détection d'appui touche 20A présente une face externe 201, orientée dans sa majeure partie vers la couche de touches 10, et une face interne 202 opposée à ladite face externe 201. Le circuit imprimé de connexion 20 comprend, au sein de sa portion de détection d'appui touche 20A, au moins une paire de contacts 203 (autrement dit, une pluralité de contacts) associée à au moins une touche 11 du clavier. Pour chaque touche 11 du clavier, on retrouve également un élément d'interconnexion 30 destiné à assurer l'interconnexion électrique des contacts de la paire de contacts associée 203, lorsqu'une pression est exercée sur cette touche.

Le clavier de la technique proposée se distingue cependant des claviers de l'art antérieur sur au moins deux caractéristiques principales :
- d'une part le circuit imprimé de connexion 20 est un circuit imprimé flexible (et non plus rigide) qui comprend, outre la portion de détection d'appui touche 20A, une portion de raccordement 20B formant repli sous la face interne 202 de ladite portion de détection d'appui touche 20A ;
- d'autre part, les paires de contacts 203 associées aux différentes touches du clavier sont disposées sur la face interne 202 de la portion de détection d'appui touche 20A, et non plus sur sa face externe 201 comme c'est le cas dans les solutions de l'art antérieur.

Ces caractéristiques sont complémentaires et permettent, ensemble, de proposer un clavier offrant des avantages par rapport aux claviers de l'art antérieur, notamment en termes de sécurisation. En effet, avec la technique proposée et comme cela est visible notamment sur la figure 2 (mais aussi sur les figures 3 et 4), les paires de contacts 203 ne sont plus immédiatement accessibles sous la couche 10 de touche, puisqu'elles sont maintenant disposées sur la face interne 202 de la portion de détection d'appui touche 20A du circuit imprimé de connexion 20. Ces paires de contacts 203 sont donc par nature moins exposées que les paires de contact des solutions de l'art antérieur, puisqu'elles sont maintenant situées sous le circuit imprimé de connexion 20 : ce circuit imprimé constitue donc un obstacle supplémentaire à franchir pour une personne malveillante qui souhaiterait accéder aux paires de contact 203.

Une telle architecture de clavier est rendue possible par l'utilisation d'un circuit imprimé de connexion 20 se présentant sous la forme d'un circuit imprimé flexible. Le circuit imprimé de connexion 20 peut donc subir des déformations locales, au moyen desquelles la force de pression exercée sur une touche 11 du clavier peut être communiquée à l'élément d'interconnexion correspondant 30 maintenant situé sous le circuit imprimé de connexion 20.

Le fait que le circuit imprimé de connexion 20 soit flexible permet également de mettre en œuvre un repli de la portion de raccordement 20B sous la portion de détection d'appui touche 20A (sur les figures 2 à 4, une frontière fictive entre la portion de détection d'appui touche 20A et la portion de raccordement 20B du circuit imprimé de connexion 20 est représentée de manière purement illustrative et non limitative par un trait oblique épais, étant entendu notamment que la position de ce trait au sein de la zone de jonction entre ces deux portions est purement arbitraire sur les figures). De cette manière, les paires de contacts 203 et les pistes électriques sont également protégées par les côtés (via le repli), et par en-dessous (par exemple via le circuit imprimé 60 - typiquement la carte mère du dispositif électronique de saisie de données - auquel le circuit imprimé de connexion 20 est raccordé par sa portion de raccordement 20B, étant entendu que le circuit imprimé 60 n'est pas obligatoire, et pourrait être remplacé par tout autre élément de connexion du circuit imprimé de connexion 20). Sur les figures 2 à 4, le repli de la portion de raccordement 20B sous la portion de détection d'appui touche 20A n'est illustré que pour un côté du clavier, ceci notamment afin de simplifier les figures et d'en faciliter la lecture. Il va de soit qu'une telle représentation est purement illustrative et non limitative : en fonction des situations dans lesquelles le clavier est mis en œuvre, et selon différents modes de réalisation de la technique proposée, ce repli peut également être effectué sur n'importe quel autre côté du clavier, ou sur plusieurs côtés de manière simultanée. Préférentiellement, dans un mode de réalisation particulier, le repli est effectué sur tous les côtés du clavier : de cette manière, le circuit imprimé flexible 20 forme, avec par exemple la carte mère sur lequel il est raccordé, une enceinte de protection enfermant complètement - c'est à dire de tous les côtés - les zones sensibles du clavier. Ces zones, qui sont celles au sein desquelles transitent des signaux véhiculant des données potentiellement confidentielles, comprennent notamment la face interne 202 sur laquelle sont positionnées les paires de contacts 203 associées aux différentes touches du clavier, et les éléments d'interconnexion 30.

Ces caractéristiques du circuit imprimé de connexion 20 suffisent par elles-mêmes à mettre en œuvre une sécurisation complète et efficace du clavier, de façon plus simple et moins coûteuse que les solutions de l'art antérieur puisqu'il n'est pas nécessaire de recourir à un circuit imprimé complémentaire de protection tel que le circuit imprimé 40 de la figure 1b.

### Élément de protection

Dans un mode de réalisation particulier de la technique proposée, le circuit imprimé flexible 20 comprend au moins un élément de protection. Selon une caractéristique particulière, ce ou ces éléments de protection s'étendent sensiblement sur au moins toute la face externe 201 de la portion de détection d'appui touche 20A. Alternativement ou complémentairement, ce ou ces éléments de protection s'étendent sensiblement sur toute la surface d'au moins une couche du circuit imprimé flexible 20 positionnée entre la face interne 202 et la face externe 201 : une telle couche est donc une couche enfouie du circuit imprimé flexible 20, ce qui est avantageux en termes de sécurisation car elle est alors plus difficilement détectable et contournable par une personne malveillante qui chercherait à atteindre les zones sensibles du clavier. Un élément de protection se présente par exemple sous la forme d'un ou de plusieurs treillis de détection d'intrusion ou sous la forme d'une ou de plusieurs pistes continues de détection d'intrusion (par exemple un circuit de masse, et deux treillis à des potentiels différents). Ce ou ces éléments de protection sont positionnés de sorte à couvrir une majeure partie de la portion de détection d'appui touche 20A du circuit imprimé de connexion 20. En particulier, les éléments de protection couvrent les zones du circuit imprimé de connexion 20 qui se trouvent au regard des zones de la face interne 202 où sont disposées les paires de contacts 203. Ainsi, ces zones particulièrement sensibles sont protégées de manière optimale par ces éléments de protection. Selon une caractéristique particulière, les éléments de protection peuvent éventuellement s'étendre également sur au moins une partie de la portion de raccordement 20B du circuit imprimé flexible 20 (une telle caractéristique s'avère particulièrement intéressante lorsque la portion de raccordement 20B est raccordée sous la carte mère du dispositif électronique de saisie de données plutôt que dessus, comme cela est par exemple illustré en relation avec la figure 4). Idéalement, les éléments de protection sont répartis sur l'ensemble du circuit imprimé de connexion 20, de manière à assurer une sécurisation la plus efficace possible du clavier.

Avantageusement, le circuit imprimé flexible 20 est donc un circuit imprimé multicouches, présentant au moins une couche de protection (la face externe 201 et/ou au moins une couche intermédiaire enfouie entre la face externe 201 et la face interne 202) comprenant les éléments de protection précédemment décrit, et une face interne 202 utilisée pour accueillir les paires de contact 203, les pistes électriques et les composants nécessaires à la mise en œuvre de la détection des appuis touche. Cette structure particulière du circuit imprimé flexible 20, présentant au moins un repli, permet de former, avec la carte mère sur lequel il est raccordé, une enceinte de protection des zones sensibles du clavier. Toute tentative d'intrusion visant à accéder à ces zones où transitent des signaux véhiculant des données potentiellement confidentielles peut alors être détectée. Par ailleurs, sur la face interne 202 du circuit imprimé flexible, d'autres composants du dispositif électronique de saisie de données peuvent également être positionnés, afin de remplir d'autres fonctions (et notamment des fonctions indépendantes des fonctions de gestion du clavier). Par exemple un processeur de traitement sécurisé peut être soudé sur cette face interne 202 pour effectuer des traitements cryptographiques associés aux opérations du dispositif électronique de saisie de données. Des composants de détection d'intrusion peuvent également être positionnés sur cette face interne 202, bénéficiant ainsi de la protection apportée par la couche de protection comprenant les éléments de protection. La sécurité globale du dispositif électronique de saisie de données (dans lequel ce clavier est inséré) est alors grandement augmentée, et la taille du dispositif électronique de saisie de données peut ainsi être réduite, car le circuit imprimé de connexion 20 du clavier est alors à même de remplir des fonctions différentes qui jusqu'alors étaient réparties sur plusieurs circuits imprimés distincts.

### Dômes déformables

Dans un mode de réalisation particulier du clavier de la technique proposée, les éléments d'interconnexion 30 sont des dômes déformables. Ils sont utilisés pour réaliser l'interconnexion électrique des différents contacts des paires de contacts 203 associés aux touches 11, lors d'appuis sur ces touches. Ces dômes déformables sont éventuellement rassemblés au sein d'une ou plusieurs feuilles de dômes (représentées en pointillés sur les figures 2 à 4). Les dômes 30 sont disposés au regard de chaque paire de contacts 203, entre la face interne 202 de la portion de détection d'appui touche 20A du circuit imprimé flexible 20 et un élément de contre-appui 50. La base de chaque dôme déformable 30 est orientée vers la face interne 202, c'est à dire vers la paire de contacts 203 qui lui est associée, tandis que le sommet de chaque dôme 30 est orienté vers l'élément de contre-appui 50. En d'autres termes, les dômes 30 sont montés dans une position inversée vis-à-vis des solutions classiques de l'art antérieur : ce sont leurs bases, et non plus leurs sommets, qui sont dirigées vers les touches 11 du clavier. Lorsqu'une touche 11 est dans son état de repos, c'est à dire non enfoncée, les différents contacts de la paire de contacts 203 associée à la touche ne sont pas interconnectés électriquement. Lorsque la touche 11 est pressée, sous l'action d'un doigt de l'utilisateur par exemple, la force de pression est transmise de la touche 11 au dôme déformable 30, via une déformation locale du circuit imprimé flexible 20. Sous l'action de cette force de pression et de la force de réaction de l'élément de contre-appui 50, le circuit imprimé flexible 20 et le dôme 30 se déforment jusqu'à ce que les contacts de la paire de contacts 203 viennent en contact avec l'intérieure métallisé du sommet du dôme, ce qui provoque leur interconnexion électrique. Il est intéressant de noter ici que, lors de la déformation du dôme 30, c'est la paire de contacts 203 qui se déplace en direction du sommet du dôme bloqué par l'élément de contre-appui 50, de par la déformation locale simultanée du circuit imprimé flexible 20. En d'autres termes, c'est la base du dôme 30 qui se déplace en direction de son sommet lors de la déformation subie par le dôme, contrairement à ce qui se produit dans la solution classique de l'art antérieur déjà décrite en relation avec la figure 1b, dans laquelle c'est le sommet du dôme qui se déplace en direction de sa base lors de la déformation du dôme. La base du dôme étant par définition plus large que son sommet, le montage inversé des dômes offre alors de nombreux avantages par rapport au montage classique (non inversé) de l'art antérieur. En particulier, le fait que ce soit la base des dômes (et non plus le sommet) qui est maintenant orientée vers la couche de touche procure une meilleure tenue mécanique des touches, qui se traduit par une stabilité accrue du clavier. Par ailleurs, ce montage inversé permet également de stabiliser les dômes, et d'améliorer ainsi l'effet tactile ressenti par l'utilisateur lorsqu'il presse une touche. Outre ces bénéfices relatifs à la stabilité du clavier ou à l'effet tactile procuré à l'utilisateur, le montage inversé des dômes permet également de limiter les contraintes exercées sur le circuit imprimé flexible 20 lorsqu'une touche 11 est pressée. En effet, avec une telle mise en œuvre, les dômes déformables et les touches associées peuvent être conformés et dimensionnés de manière à appuyer sur une surface de dimension plus large que si des dômes similaires étaient montés de manière classique, c'est à dire non inversés. Les dômes déformables peuvent ainsi être conformés et dimensionnés (tant au niveau de leur hauteur que de la taille de leur base notamment) de sorte qu'une pression exercée sur une touche du clavier entraîne une déformation locale du circuit imprimé flexible sur une surface de dimension relativement large, par exemple de l'ordre de quatre millimètres par quatre millimètres. Le circuit imprimé flexible est ainsi relativement peu contraint par cette déformation locale. Il en résulte que les éléments de protection éventuellement intégrés au circuit imprimé flexible sont également moins contraints lors de la déformation de ce circuit imprimé flexible. Une telle caractéristique s'avère particulièrement intéressante lorsque ces éléments de protection prennent la forme de treillis de protection finement gravés et représentant des dessins complexes : de tels treillis sont en effet d'une part relativement fragiles (les pistes électriques formant le treillis de protection sont généralement plus fines que les pistes électriques mises en œuvre pour assurer le fonctionnement courant du dispositif électronique de saisie de données), et d'autre part la complexité de leurs dessins (c'est à dire des formes des pistes électriques qui les composent) rend ces treillis de protections particulièrement sensibles aux déplacements répétés engendrés par la déformation du circuit imprimé flexible. La configuration en montage inversé des dômes tel que proposée dans la présente technique est alors particulièrement adaptée, dans la mesure où de tels treillis de protection sont moins sollicités - lorsque qu'une touche est pressée et que le circuit imprimé flexible se déforme - que si les dômes avaient été montés de manière classique. L'usure du treillis de protection est ainsi limitée par rapport aux solutions de l'art antérieur. La technique proposée permet donc de réduire les risques de détections incorrectes et intempestives d'intrusion (faux-positifs) qui seraient en fait dues à la détérioration prématurée du treillis de protection, alors même que le clavier faisait l'objet d'une utilisation tout à fait normale.

Ces caractéristiques présentées en relation avec le principe général de la technique proposée sont bien entendues combinables entre-elles, sans sortir du cadre de la présente invention.

### Description de différents modes de réalisation

On décrit maintenant, en relation avec les figures 2, 3 et 4, différents modes de réalisation de l'invention. Ces différents exemples de mise en œuvre illustrent notamment l'agencement d'un clavier de la technique proposée au sein d'un dispositif électronique de saisie de données intégrant un lecteur de cartes à mémoire 70. Dans la suite de la description, on considère plus particulièrement que le dispositif électronique de saisie de données est un terminal de paiement électronique. Dans tous ces modes de réalisation, l'élément d'interconnexion est un dôme déformable monté en position inversée vis-à-vis des solutions classique de l'art antérieur, conformément à la technique précédemment décrite. Les figures 2, 3 et 4 présentent notamment divers modes de réalisation pour la mise en œuvre du contre-appui permettant d'obtenir la force de réaction requise pour qu'un dôme se déforme lors d'un appui sur la touche associée du clavier.

Dans le mode de réalisation décrit en relation avec la **figure 2**, l'élément de contre-appui 50 prend la forme d'une pièce rigide permettant de supporter le clavier. De préférence, cette pièce est formée dans un matériau offrant une bonne résistance mécanique, par exemple du métal ou du plastique. Comme montré sur la figure 2, l'élément de contre-appui 50 peut notamment prendre la forme d'un capot de protection métallique, protégeant au moins une partie du lecteur de cartes à mémoire 70. Le lecteur de cartes à mémoire 70 est en effet - au même titre que le clavier - une zone particulièrement sensible du dispositif électronique de saisie de données, car des signaux véhiculant des données confidentielles y transitent (notamment au niveau du connecteur de carte à mémoire présent dans le lecteur). Il convient donc de le protéger contre toute tentative d'intrusion. L'élément de contre-appui 50 joue alors le double rôle de support pour le clavier d'une part, et de capot de protection du lecteur de cartes à mémoire 70 d'autre part. Dans le mode de réalisation présenté en figure 2, l'élément de contre-appui protège la partie supérieure et les côtés du lecteur de cartes à mémoire 70, et il vient reposer au moins en partie sur la carte mère 60 du terminal de paiement électronique. Cette carte mère 60 peut elle-même intégrer divers éléments de protection (comme des treillis de protection par exemple), et ainsi protéger la partie inférieure du lecteur de cartes à mémoire 70. Le fonctionnement du clavier est assuré par son raccordement à la carte mère 60 du dispositif électronique de saisie de données, au moyen de la portion de raccordement 20B du circuit imprimé de connexion 20. Le caractère flexible du circuit imprimé de connexion 20, avec le repli de la portion de raccordement 20B, permet la mise en œuvre d'une connexion dite « à l'aveugle », c'est à dire réalisée sous le capot métallique de protection formé par l'élément de contre-appui 50. Les signaux véhiculés au sein du clavier (en particulier les signaux de détection des appuis de touches) sont donc toujours protégés, aussi bien au niveau de la portion de raccordement 20B que de la portion de détection d'appui touche 20A du circuit imprimé de connexion 20.

Dans un autre mode de réalisation particulier présenté en relation avec la **figure 3**, la carte mère 60 du dispositif électronique de saisie de données fait elle-même office de support rigide pour le clavier et d'élément de contre-appui permettant d'assurer la déformation des dômes lors d'appuis sur les touches 11 du clavier. Le clavier et le lecteur de cartes à mémoire 70 sont alors, par exemple, situés de part et d'autre de la carte mère 60. En d'autres termes, le lecteur de cartes à mémoire est positionné sous la carte mère du terminal de paiement. Le terminal de paiement intègre alors, préférentiellement, d'autres moyens de protection (non représentés) qui lui sont propres, et qui permettent de sécuriser les côtés et la partie inférieure du lecteur de cartes à mémoire 70. Dans ce mode de réalisation particulier, on s'affranchit donc du capot de protection 50 de la figure 2. Une telle implémentation est particulièrement intéressante lorsqu'une mise en œuvre plus compacte du clavier, et donc du terminal de paiement, est souhaitée.

Le mode de réalisation présenté en relation avec la figure 3 présente également d'autres avantages vis-à-vis des solutions de l'art antérieur précédemment décrites. Comme exposé précédemment, dans une implémentation d'un clavier classique de l'art antérieur, la carte mère du dispositif électronique de saisie de données peut elle-même faire office, entre autres fonctionnalités, de circuit imprimé de connexion du clavier. Des zones dédiées sur la carte mère sont alors réservées pour accueillir les paires de contact utilisées pour la détection des appuis sur les touches du clavier, et jouer le rôle de contre-appui vis-à-vis des dômes déformables. On note à cet effet que, dans l'art antérieur, c'est alors la partie la plus large des dômes, en l'occurrence leur base, qui prend appui sur la carte mère du dispositif électronique de saisie de données. Chacune de ces zones d'accueil doit donc être de dimensions suffisantes pour recevoir la base d'un dôme, y compris quand ce dernier est dans un état déformé (donc présentant potentiellement une base plus large que lorsqu'il n'est pas déformé). Lorsqu'une telle implémentation est envisagée dans l'art antérieur, il est également nécessaire de prévoir, directement sur la carte mère, les pistes électriques qui permettent d'acheminer les différents signaux générés au niveau du clavier (notamment les signaux de détection d'appui de touche). Outre les problèmes liés à la sécurisation déjà évoqués, on constate donc qu'une telle solution de l'art antérieur impose de réserver beaucoup d'espace sur la carte mère du dispositif électronique de saisie de données, pour la mise en œuvre d'un clavier seul. Un tel espace, s'il était disponible, permettrait d'intégrer à la carte mère de nouvelles fonctionnalités, potentiellement plus utiles que la simple gestion d'un clavier. Le mode de réalisation présenté en relation avec la figure 3 ne présente pas ces inconvénients : il permet non seulement d'aboutir à une solution de compacité équivalente avec un meilleur niveau de sécurisation, comme cela a déjà été développé précédemment, mais il permet également de libérer de la place sur la carte mère du dispositif électronique de saisie de données. En effet, comme cela est visible sur la figure 3, les paires de contacts 203 ne sont plus disposées sur la carte mère 60 du dispositif électronique de saisie de données, mais sur le circuit imprimé flexible 20 de connexion du clavier. Par ailleurs, les dimensions des zones de contre-appui - qu'il est toujours nécessaire de prévoir en vis-à-vis des dômes 30 sur la carte mère 60 - sont sensiblement réduites par rapport aux dimensions des zones de contre-appui de l'art antérieur. En effet, avec le montage en position inversée mis en œuvre dans la technique proposée, ce sont maintenant les sommets des dômes 30 - donc leur partie la plus étroite - et non plus leurs bases qui viennent en appui sur la carte mère 60. Le mode de réalisation présenté en relation avec la figure 3 permet donc un gain d'espace important au niveau de la carte mère du dispositif électronique de saisie de données, lorsqu'on compare cette solution à celles de l'art antérieur.

Selon un principe similaire, la **figure 4** illustre un mode de réalisation permettant de récupérer encore plus de place au niveau de la carte mère 60, tout en conservant un clavier relativement compact. Dans ce mode de réalisation particulier, un élément d'espacement 80 fait office d'élément de contre-appui pour les dômes déformables 30. Cet élément d'espacement 80 est positionné entre le sommet des dômes 30, et la carte mère 60 du dispositif électronique de saisie de données. L'élément d'espacement 80 prend par exemple la forme d'une pièce rigide qui comprend une surface sensiblement plane reposant sur des pattes d'appuis 801. L'élément d'espacement 80 prend appui en différents points sur la carte mère 60, par le biais des pattes d'appui 801. Ces pattes d'appui 801 sont conformées et dimensionnées de telle sorte qu'elles présentent une surface de contact très réduite avec la carte mère 60. En particulier, la surface de contact occupée par une patte d'appui 801 sur la carte mère 60 est moins étendue que la surface de la zone de contre-appui qu'il est nécessaire de prévoir sur la carte mère 60 en vis-à-vis de chaque dôme, si on compare le mode de réalisation de la figure 4 avec celui de la figure 3 par exemple. Par ailleurs, les pattes d'appui 801 présentent une section plus fine sur toute leur hauteur, en comparaison avec la section d'un dôme qui s'élargit à mesure que l'on s'éloigne de son sommet. Enfin, le nombre de pattes d'appui de l'élément d'espacement 80 peut être inférieur au nombre de dômes nécessaire à la mise en œuvre du clavier. Grâce à ces caractéristiques des pattes d'appui 801, la solution consistant à utiliser un tel élément d'espacement 80 comme élément de contre-appui permet de libérer encore plus d'espace au niveau de la carte mère 60 du dispositif électronique de saisie de données, notamment lorsqu'on la compare avec la solution consistant à se servir directement de la carte mère 60 comme élément de contre-appui. Cet espace libéré peut être mis à profit pour installer d'autres pistes électriques et/ou d'autres composants sur la carte mère 60, de manière à proposer de nouvelles fonctionnalités.

Selon un autre aspect, l'invention se rapporte également à un dispositif électronique de saisie de données comprenant un clavier selon la technique précédemment décrite. Il peut s'agir notamment d'un dispositif électronique de saisie de données utilisé pour effectuer des opérations qui font intervenir ou portent sur des objets de nature confidentielle, tel qu'un terminal de paiement électronique par exemple.

## Revendications

1. Clavier pour dispositif électronique de saisie de données, ledit clavier comprenant :
- une pluralité de touches (11) définissant une couche de touches (10) ;
- un circuit imprimé de connexion (20) dudit clavier, comprenant une portion de détection d'appui touche (20A), ladite portion de détection d'appui touche comprenant une face externe (201), orientée vers ladite couche de touches (10), et une face interne (202) opposée à ladite face externe (201) ;
- pour chaque touche (11) de ladite couche de touches (10), un élément d'interconnexion (30) et au moins une paire de contacts (203) sur ledit circuit imprimé de connexion (20), ledit élément d'interconnexion (30) étant destiné à assurer l'interconnexion électrique des contacts de ladite paire de contacts (203) lorsqu'une pression est exercée sur la touche associée dudit clavier ;
ledit clavier étant tel que :
- ledit circuit imprimé de connexion (20) est un circuit imprimé flexible ; et
- ladite au moins une paire de contacts (203) est disposée sur la face interne (202) de ladite portion de détection d'appui touche (20A);
ledit clavier étant **caractérisé en ce que** ledit circuit imprimé de connexion (20) comprend en outre une portion de raccordement (20B), ladite portion de raccordement (20B) formant un repli sous la face interne (202) de ladite portion de détection d'appui touche (20A).

2. Clavier selon la revendication 1, **caractérisé en ce que** ledit circuit imprimé flexible (20) comprend au moins un élément de protection, ledit au moins un élément de protection s'étendant sensiblement sur toute la surface de ladite face externe (201) et/ou sur toute la surface d'au moins une couche dudit circuit imprimé flexible positionnée entre ladite face interne (202) et ladite face externe (201).

3. Clavier selon la revendication 1, **caractérisé en ce que** ledit élément d'interconnexion (30) prend la forme d'un dôme déformable disposé entre ladite face interne (202) de la portion de détection d'appui touche (20A) et un élément de contre-appui, la base dudit dôme déformable (30) étant orientée vers ladite face interne (202).

4. Clavier selon la revendication 3, **caractérisé en ce que** ledit dôme déformable (30) est conformé et dimensionné de sorte qu'une pression exercée sur la touche associée dudit clavier entraîne une déformation locale dudit circuit imprimé flexible (20) sur une surface de dimensions de l'ordre de quatre millimètres par quatre millimètres.

5. Clavier selon la revendication 3 ou 4, **caractérisé en ce que** ledit élément de contre-appui prend la forme d'un capot de protection (50) destiné à protéger un élément dudit dispositif électronique de saisie de données.

6. Clavier selon la revendication 3 ou 4, **caractérisé en ce que** ledit élément de contre-appui est la carte mère (60) dudit dispositif électronique de saisie de données.

7. Clavier selon la revendication 3 ou 4, **caractérisé en ce que** ledit élément de contre-appui prend la forme d'un élément d'espacement (80) prenant appui, via des liaisons sensiblement ponctuelles ou linéaires, sur la carte mère (60) dudit dispositif électronique de saisie de données.

8. Dispositif électronique de saisie de données **caractérisé en ce qu'**il comprend un clavier selon l'une quelconque des revendications 1 à 7.

9. Dispositif électronique de saisie de données selon la revendication 8, **caractérisé en ce que** ledit dispositif électronique de saisie de données est un terminal de paiement électronique.

## Patentansprüche

1. Tastatur für elektronisches Datenerfassungsgerät, wobei die Tastatur aufweist
- mehrere Tasten (11), die eine Tastenschicht (10) definieren,
- eine gedruckte Schaltung zum Anschließen (20) der Tastatur, umfassend einen Abschnitt zur Tastendruckerfassung (20A), wobei der Abschnitt zur Tastendruckerfassung eine Außenseite (201), die der Tastenschicht (10) zugewandt ist, und eine Innenseite (202) aufweist, die der Außenseite (201) gegenüberliegt,
- für jede Taste (11) der Tastenschicht (10) ein Verbindungselement (30) und mindestens ein Kontaktpaar (203) auf der gedruckten Schaltung zum Anschließen (20), wobei das Verbindungselement (30) dazu bestimmt ist, die elektrische Verbindung der Kontakte des Kontaktpaars (203) zu gewährleisten, wenn die zugeordnete Taste der Tastatur gedrückt wird,
wobei die Tastatur derartig ist, dass:
- die gedruckte Schaltung zum Anschließen (20) eine flexible gedruckte Schaltung ist und
- wobei das mindestens eine Kontaktpaar (203) auf der Innenseite (202) des Abschnitts zur Tastendruckerfassung (20A) angeordnet ist,
wobei die Tastatur **dadurch gekennzeichnet ist, dass** die gedruckte Schaltung zum Anschließen (20) ferner einen Verbindungsabschnitt (20B) aufweist, wobei der Verbindungsabschnitt (20B) einen Einschlag unter der Innenseite (202) des Abschnitts zur Tastendruckerfassung (20A) bildet.

2. Tastatur nach Anspruch 1, **dadurch gekennzeichnet, dass** die flexible gedruckte Schaltung (20) mindestens ein Schutzelement aufweist, wobei sich das mindestens eine Schutzelement im Wesentlichen über die gesamte Oberfläche der Außenseite (201) und/oder über die gesamte Oberfläche von mindestens einer Schicht der flexiblen gedruckten Schaltung erstreckt, die zwischen der Innenseite (202) und der Außenseite (201) angeordnet ist.

3. Tastatur nach Anspruch 1, **dadurch gekennzeichnet, dass** das Verbindungselement (30) die Form einer verformbaren Kuppel annimmt, die zwischen der Innenseite (202) des Abschnitts zur Tastendruckerfassung (20A) und einem Gegendruckelement angeordnet ist, wobei die Basis der verformbaren Kuppel (30) der Innenseite (202) zugewandt ist.

4. Tastatur nach Anspruch 3, **dadurch gekennzeichnet, dass** die verformbare Kuppel (30) derart ausgebildet und dimensioniert ist, dass ein Druck, der auf die zugeordnete Taste der Tastatur ausgeübt wird, eine lokale Verformung der flexiblen gedruckten Schaltung (20) auf einer Oberfläche von Abmessungen in der Größenordnung von vier Millimetern mal vier Millimetern mit sich bringt.

5. Tastatur nach Anspruch 3 oder 4, **dadurch gekennzeichnet, dass** das Gegendruckelement die Form einer Schutzabdeckung (50) annimmt, die dazu bestimmt ist, ein Element des elektronischen Datenerfassungsgeräts zu schützen.

6. Tastatur nach Anspruch 3 oder 4, **dadurch gekennzeichnet, dass** das Gegendruckelement die Hauptplatine (60) des elektronischen Datenerfassungsgeräts ist.

7. Tastatur nach Anspruch 3 oder 4, **dadurch gekennzeichnet, dass** das Gegendruckelement die Form eines Abstandselements (80) annimmt, das über im Wesentlichen punktförmige oder lineare Verbindungen auf der Hauptplatine (60) des elektronischen Datenerfassungsgeräts aufliegt.

8. Elektronisches Datenerfassungsgerät, **dadurch gekennzeichnet, dass** es eine Tastatur nach einem der Ansprüche 1 bis 7 aufweist.

9. Elektronisches Datenerfassungsgerät nach Anspruch 8, **dadurch gekennzeichnet, dass** das elektronische Datenerfassungsgerät ein elektronisches Zahlungsterminal ist.

## Claims

1. Keypad for an electronic data-entry device, said keypad comprising:
- a plurality of keys (11) defining a layer of keys (10);
- a connection printed-circuit board (20) for said keypad, comprising a key-press detection portion (20A), said key-press detection portion comprising an external face (201) oriented towards said layer of keys (10) and an internal face (202) opposite said external face (201);
- for each key (11) of said layer of keys (10), an interconnection element (30) and at least one pair of contacts (203) on said connection printed-circuit board (20), said interconnection element (30) being intended for making the electrical connection of the contacts of said pair of contacts (203) when a pressure is exerted on the associated key of said keypad;
said keypad being such that:
- said connection printed-circuit board (20) is a flexible printed-circuit board; and
- said at least one pair of contacts (203) is disposed on the internal face (202) of said key-press detection portion (20A);
said keypad being **characterized in that** said connection printed-circuit board (20) further comprising a connecting portion (20B), said connecting portion (20B) forming a fold beneath the internal face (202) of said key-press detection portion (20A).

2. Keypad according to claim 1, **characterized in that** said flexible printed-circuit board (20) comprises at least one protective element, said at least one protective element extending substantially throughout the surface of said external face (201) and/or throughout the surface of at least one layer of said flexible printed-circuit board positioned between said internal face (202) and said external face (201).

3. Keypad according to claim 1, **characterized in that** said interconnection element (30) takes the form of a deformable dome disposed between said internal face (202) of the key-press detection portion (20A) and a counter-pressure element, the base of said deformable dome (30) being oriented towards said internal face (202).

4. Keypad according to claim 3, **characterized in that** the deformable dome (30) is shaped and sized so that a pressure exerted on the associated key of said keypad leads to a local deformation of said flexible printed-circuit board (20) on a surface area with a size of the order of four millimeters by four millimeters.

5. Keypad according to claim 3 or 4, **characterized in that** said counter-pressure element takes the form of a protective cover (50) to protect an element of said electronic data-entry device.

6. Keypad according to claim 3 or 4, **characterized in that** said counter-pressure element is the motherboard (60) of the electronic data-entry device.

7. Keypad according to claim 3 or 4, **characterized in that** said counter-pressure element takes the form of a spacing element (80) that takes support, through substantially point-like links or line-like links, on the motherboard (60) of the electronic data-entry device.

8. Electronic data-entry device **characterized in that** it comprises a keypad according to any one of the claims 1 to 7.

9. Electronic data-entry device according to claim 8, **characterized in that** said electronic data-entry device is an electronic payment terminal.
